# EUROPEAN PATENT SPECIFICATION

(11) **EP 2 648 129 B1**
(45) Date of publication and mention of the grant of the patent: **13.03.2019**
(21) Application number: 12195181.8
(22) Date of filing: 30.11.2012
(51) Int. Cl.: G06F 21/74, G06F 21/83, H04W 12/08

(54) **Method and apparatus for securing touch input**
Verfahren und Vorrichtung zur Sicherung von Berührungseingaben
Procédé et appareil permettant de sécuriser une entrée tactile

(30) Priority: 02.12.2011 US 201161566113 P; 07.02.2012 KR 20120012306
(43) Date of publication of application: 09.10.2013
(73) Proprietor: Samsung Electronics Co., Ltd., Gyeonggi-do 443-742 (KR)
(72) Inventor: Ryu, Jaemin, Gyeonggi-do, 443-742 (KR); Kwag, Kyungsoo, Gyeonggi-do, 443-742 (KR); Lee, Jungkyuen, Gyeonggi-do, 443-742 (KR); Jung, Kyungim, Gyeonggi-do, 443-742 (KR); Choi, Hyunjin, Gyeonggi-do, 443-742 (KR)
(74) Representative: HGF Limited

(56) References cited:
- WO-A1-2011/051757
- US-A1- 2004 024 710
- US-A1- 2008 209 212

## Description

### BACKGROUND OF THE INVENTION

### 1. Field of the Invention

The present invention relates generally to a method and apparatus for achieving security in relation to inputting a touch through a touch panel of an electronic device and, more particularly, although not exclusively, to a method and apparatus that ensures the security of information input through the touch panel.

### 2. Description of the Related Art

With advances in communication technologies, electronic devices having wireless communication units may send and receive various types of information to and from many servers (e.g. web servers) on a network (e.g. the Internet). In particular, for many reasons, online shopping over the Internet has become a common part of life. To buy a product through online shopping, a buyer using an electronic device may be required to perform an electronic payment procedure. For electronic payment, the buyer may send a Personal Identification Number (PIN) code corresponding to a credit card or a bank account to the corresponding web server. In recent years, as increasing numbers of electronic devices include touch panels enabling easy input, users increasingly enter PIN codes through touch panels. An electronic device performing an electronic payment procedure may display a virtual keypad for entering a PIN code on the touch panel.

Theft of PIN codes by other persons may cause severe financial damage to users or buyers. Unfortunately, as electronic payment systems have become popular, the number of hacking attempts for illegally acquiring PIN codes has also increased.

Currently, a PIN code hacking program running (for example without knowledge of a user) on an electronic device may deduce a PIN code entered through a touch panel of the electronic device from the layout of touched numeric keys of a keypad displayed on the touch panel, touch signals generated by the touch panel, or a combination thereof.

In order to prevent such hacking, there is a need for a way to ensure security with respect to inputting a PIN code through a touch panel.

WO 2011/051757 A1 describes a device for performing transactions involving secure and non-secure information. US 2008/0209212 A1 describes a device comprising an integrated secure and non-secure display. US 2004/0024710 A describes a transaction device operable in a secure mode or an insecure mode.

### SUMMARY OF THE INVENTION

It is an aim of certain embodiments of the present invention to address, solve, mitigate or obviate, at least partly, at least one of the problems and/or disadvantages associated with the related art, including the above-described problems and/or disadvantages. Certain embodiments of the
present invention aim to provide at least one of the advantages described below. Accordingly, embodiments of the present invention provide a security method and apparatus that prevent leakage of information input through a touch panel.

In accordance with an aspect of the present invention, an apparatus for securing touch input is provided. The apparatus includes: a touchscreen comprising a touch panel and a display unit , the display unit being configured to output a secured input screen; a secure overlay frame buffer configured to render a user input screen in a secure application environment, the user input screen being for accepting the touch input via the touch panel; a non-secure overlay frame buffer configure to render an execution screen in a non-secure application environment, the execution screen being of a user interface program requiring the touch input; and a control unit configured to control the display unit to display the user input screen as an overlay above the execution screen so as to produce the input screen. The control unit is configured such that a non-secure application program running in the non-secure application environment is prevented from accessing secure data stored in the secure application environment. The control unit is configured to set a security attribute of the touchscreen to secure, and access to the touchscreen and the touch input is limited to the secure operating environment when the security attribute of the touchscreen is set to secure.

In accordance with another aspect of the present invention, a method for securing touch input is provided. The method includes: rendering in a secure operating environment a user input screen for accepting the touch input via a touch panel; rendering, in a non-secure operating environment, an execution screen of a user interface program requiring the touch input; and outputting a secured input screen by displaying the user input screen as an overlay above the execution screen. A non-secure application program running in the non-secure application environment is prevented from accessing secure data stored in the secure application environment. A security attribute of the touch panel is set to secure, and access to the touch panel and the touch input is limited to the secure operating environment when the security attribute of the touch panel is set to secure.

Another aspect of the present invention provides a computer program comprising instructions arranged, when executed, to implement a method, system and/or apparatus, in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, disclose exemplary embodiments of the invention.

### BRIEF DESCRIPTION OF THE DRAWINGS

The above and other aspects, and features and advantages of certain exemplary embodiments and aspects of the present invention will be more apparent from the following detailed description in conjunction with the accompanying drawings, in which:
FIG. 1 is a diagram illustrating a mobile terminal for ensuring security according to an embodiment of the present invention;
FIG. 2A is a block diagram illustrating a hardware architecture for ensuring security in a device according to an embodiment of the present invention;
FIG. 2B is a block diagram illustrating a mobile terminal according to an embodiment of the present invention;
FIG. 3 is a flowchart illustrating a procedure for secured input through a touch panel according to another embodiment of the present invention;
FIG. 4A is a diagram illustrating a software architecture supporting the procedure of FIG. 3 according to an embodiment of the present invention;
FIG. 4B is a diagram illustrating another software architecture supporting the procedure of FIG. 3 according to an embodiment of the present invention;
FIG. 5 is a diagram illustrating a touch input screen according to an embodiment of the present invention; and
FIG. 6 is a diagram illustrating another touch input screen according to an embodiment of the present invention.

### DETAILED DESCRIPTION OF EMBODIMENTS OF THE PRESENT INVENTION

The following description of exemplary embodiments of the present invention, with reference to the accompanying drawings, is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

The same or similar components may be designated by the same or similar reference numerals although they are illustrated in different drawings. Detailed descriptions of structures, constructions, functions or processes known in the art may be omitted for clarity and conciseness, and to avoid obscuring the subject matter of the present invention.

Throughout the description and claims of this specification, the words "comprise" and "contain" and variations of the words, for example "comprising" and "comprises", means "including but not limited to", and is not intended to (and does not) exclude other moieties, additives, components, integers or steps.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

A secure world and a normal (non-secure) world according to embodiments of the present invention are described as follows.

Embodiments of the present invention utilize computing resources. The skilled person will appreciate that computing resources encompass a wide variety of entities. For example, computing resources may include (i) hardware in the form of, for example, processors, Application Specific Integrated Circuit (ASIC) modules, memory/storage units, peripheral devices, interrupt lines, signal paths, data/address/control buses, and the like; (ii) software and/or firmware in the form of, for example operating systems, application programs, and the like; and (iii) other resources such as stored data and/or files.

In the description and claims of the present specification, a "world" refers to a certain operating environment/mode/state/domain involving a certain set of computing resources. Furthermore, a "secure world" and a "non-secure world" refer to respective operating domains differing in the level of protection given to computing resources implementing those operating domains. Here, "protection" means protection from hacking (for example in the form of unauthorized access and/or modification and/or manipulation of the computing resources) by one or more security features.

For example, a "secure world" may refer to an operating domain involving certain computing resources having a first level of protection (e.g. at least some of the computing resources are protected by one or more security features). On the other hand a "non-secure world" may refer to an operating domain involving certain computing resources having a second level of protection (e.g. fewer or none of the computing resources are protected by security features), where the first level of protection is higher than the second level of protection.

The skilled person will appreciate that there are numerous security features that may be used to protect computing resources from hacking, for example in the form of unauthorized access and/or modification and/or manipulation of the computing resources. For example, security features may include: encryption, authentication and/or verification schemes; mechanisms for isolating (physically and/or logically) components using hardware and/or software; storage of software and/or firmware and/or data and/or files in regions of protected memory or unmodifiable memory (such as a ROM or one-time programmable memory); execution of processors and other components in a secure mode; masking of interrupt lines and other inter-component signaling; and the like.

The skilled person will appreciate that different computing resources may be used in a secure world and a non-secure world, and that a specific computing resource may be used in both the secure world and the insecure world, for example by switching between a secure mode and an insecure mode, or by partitioning a specific computing resource (e.g. memory or processor resource) into secure and non-secure parts. The skilled person will also appreciate that an overall system may include both a secure world and an insecure world at the same time.

In an exemplary secure world (similar to a secure state or a secure domain), secure application programs are executed on top of a secure operating system. Secure application programs access secure data. Secure application programs are stored in a secure storage unit isolated by hardware and software mechanisms. As the capacity of the secure storage unit may be limited, for example by system design, a secure application program may be designed to have a small size, for example by supporting only essential functions. Secure data may include information stored in the secure world and secured signals generated by peripheral devices.

In an exemplary non-secure (normal) world, a non-secure operating system and non-secure application programs are provided. The non-secure operating system is a regular operating system supporting overall operations of a mobile terminal or other device, and a non-secure application program is an ordinary application program. A non-secure application program running in the non-secure world is prevented from accessing secure data. In particular, when a hacking program is executed in the non-secure world, the hacking program cannot access secure data or a process working in the secure world. According to embodiments of the present invention, as a touch input is processed in the secure world, a high level of security is ensured.

The secure world and the non-secure world may be supported by a secure processing architecture, for example based on TrustZone Technology of ARM Holdings, but other technologies may be used in other embodiments of the present invention. In certain embodiments of the present invention, security utilizing both the secure world and the non-secure world are provided.

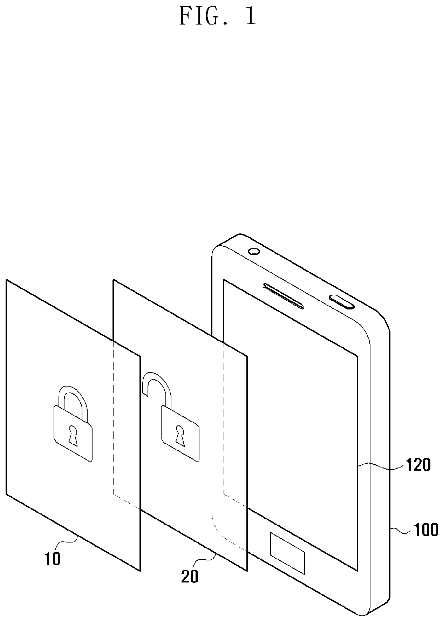

An overview of the present invention is provided with reference to FIG. 1. FIG. 1 is a diagram illustrating a mobile terminal for ensuring security in relation to inputting a touch according to an embodiment of the present invention.

Referring to FIG. 1, an embodiment of the present invention includes a mobile terminal 100 having a touchscreen 120, which includes a touch panel. The mobile terminal 100 is a smartphone in the present example, but may be another type of terminal in other embodiments of the present invention.

The mobile terminal 100 according to an embodiment of the present invention ensures security of information input through the touchscreen 120, in which at least one of an input screen and a touch input signal is secured.

In particular, when the mobile terminal 100 outputs particular screens on the touchscreen 120, it renders, in separate worlds (i.e., the secure and non-secure worlds), screens to be overlaid. Specifically, the mobile terminal 100 renders a secured screen 10 in the secure world and renders a non-secured screen 20 in the non-secure world. The mobile terminal 100 displays the secured screen 10 on the non-secured screen 20 in an overlay form. In one exemplary embodiment of the present invention, the secured screen 10 is a screen on which a virtual input pad is displayed. Here, the input pad may be a keypad having alphanumeric and special keys, or a drawing pad for drawing lines and images.

Hence, a hacking program running in the non-secure world cannot access at least one of (i) information displayed on the secured screen 10, and (ii) a touch signal input through the secured screen 10. It is difficult for a hacking program to predict information input through the touchscreen 120. As a result, embodiments of the present invention may contribute to prevention of theft of information input through the touchscreen 120.

Embodiments of the present invention may be implemented in connection with any application programs requiring a code (e.g. a PIN code), such as electronic payment programs, locking programs for terminals, and access locking programs used with respect to specific application programs. Embodiments of the present invention may also be implemented in connection with any application programs requiring alphanumeric input, such as document handling programs and message handling programs. Next, a process for entering a PIN code for electronic payment according to an embodiment of the present invention is described as follows.

A mobile terminal according to an embodiment of the present invention may be any electronic device having a touchscreen and capable of supporting a secure world and a non-secure world. For example, the mobile terminal may be a small portable device or electronic appliance, such as a cellular phone, a portable multimedia player, a digital broadcast receiver, a personal digital assistant, music player, such as a Moving Picture Experts Group (MPEG) Audio Layer 3 (MP3) player, a portable game console, a tablet computer, a smartphone, a car navigation aid, a television set, a refrigerator, a washing machine, etc..

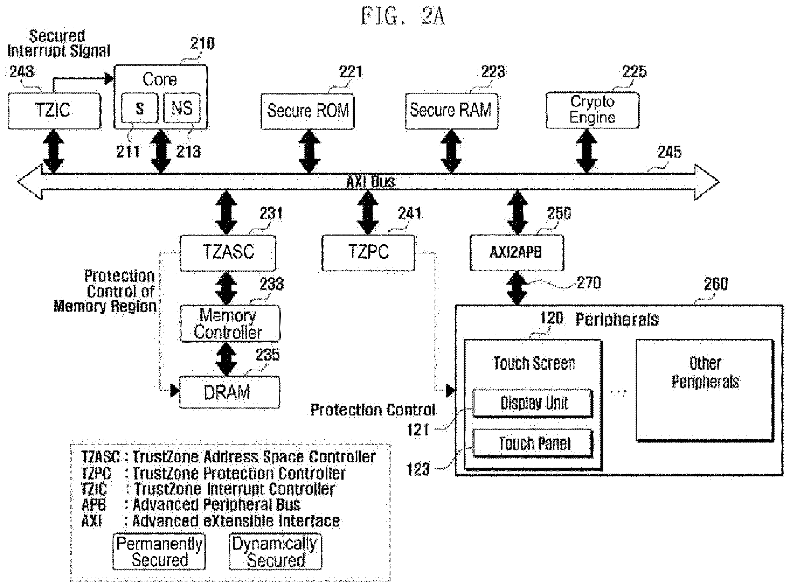

FIG. 2A is a block diagram illustrating a hardware configuration according to an embodiment of the present invention.

Referring to FIG. 2A, the hardware configuration may include a System on a Chip (SoC) based on TrustZone architecture of ARM Holdings and peripheral devices connected to the SoC.

The SoC includes a core processor 210, a secure Read-Only Memory (ROM) 221, a secure Random Access Memory (RAM) 223, a crypto engine 225, a TZASC (TrustZone address space controller) 231, a memory controller 233, a Dynamic RAM (DRAM) 235, a TrustZone Protection Controller (TZPC) 241, and a TrustZone Interrupt Controller (TZIC) 243. The components of the SoC are interconnected for communication through a system bus such as an Advanced eXtensible Interface (AXI) bus 245.

The core processor 210 provides an application execution environment including separate secure and non-secure worlds. To achieve this, the core processor 210 includes a secure core processor 211 and a non-secure core processor 213. Here, the secure core processor 211, which is a virtual processor, provides the secure world, and the non-secure core processor 213, which is also a virtual processor, provides the non-secure world.

The secure ROM 221 and secure RAM 223 are isolated by hardware and software mechanisms. The secure ROM 221 and secure RAM 223 store a secure operating system, and secure application programs and associated secure data.

The crypto engine 225 performs cryptographic tasks based on cryptographic algorithms.

The TZASC 231 controls memory regions including the DRAM 235. The TZASC 231 controls security of a memory region with particular addresses. For example, the TZASC 231 may set the security attribute of a given memory region of the DRAM 235 to "secure". Later, when the non-secure core processor 213 attempts to access the memory region of the DRAM 235 whose security attribute is set to "secure", the TZASC 231 rejects the access attempt. The TZASC 231 allows the secure core processor 211 to access the memory region whose security attribute is set to "secure".

In one example according to an embodiment of the present invention, the DRAM 235 is equipped with a secure overlay frame buffer and a non-secure overlay frame buffer. The secure overlay frame buffer has a security attribute set to "secure" by the TZASC 231 and is accessible in the secure world. A non-secure application program is not allowed to access the secure overlay frame buffer. In the present example according to an embodiment of the present invention, a non-secure program cannot identify the layout or elements of the secured screen that is rendered in the secure overlay frame buffer. Hence, even if information indicating locations of touch inputs is leaked, security of information on the arrangement of elements with respect to the secured screen is assured. A wallpaper (or any other display features or UI elements not relating to the input of secure information) displayed behind the secured screen may be rendered in the non-secure overlay frame buffer of the DRAM 235 whose security attribute is not set.

The memory controller 233 performs data movement within the DRAM 235.

TZPC 241 sets security attributes of peripheral units to control access of the core processor 210 to the peripheral units. In particular, the TZPC 241 may set the security attribute of the touchscreen 120 to "secure". The touchscreen 120 whose security attribute is set to "secure" is inaccessible from the non-secure world. This is described later in relation with an AXI to Advanced Peripheral Bus (APB) (AXI2APB) bridge 250.

The TZIC 243 sets the security attributes of interrupt lines. In particular, the TZIC 243 sets the security attribute of an interrupt line connected to a touch panel 123. For example, the user may enter a touch input on the touch panel 123 to provide desired information while viewing the secured screen output on a display unit 121. When an input is generated on the touch panel 123, the TZIC 243 ensures security of the corresponding interrupt signal. Then, the secured interrupt signal can be processed by the secure core processor 211. Hence, an interrupt signal corresponding to a contact with the touchscreen 120 is security processed by the TZIC 243, and is received by the secure core processor 211 and information carried by the interrupt signal is indentified. In addition, the TZIC 243 controls the source (i.e., the touch panel 123) of a secured interrupt signal to be masked from a non-secure interrupt controller. When an interrupt signal corresponding to a user touch input is generated on the touch panel 123, the non-secure interrupt controller does not deliver the interrupt signal to the non-secure core processor 213. Hence, the non-secure core processor 213 is unaware of information input by the user, and the input information cannot be used by a hacking program.

Most peripheral units are interconnected through an APB 170. The touchscreen 120 including the display unit 121 and the touch panel 123 are examples of peripheral units.

Communication between the SoC and peripheral units 260 is performed through the AXI2APB bridge 250. The AXI2APB bridge 250 may arbitrate accesses of the SoC components to the peripheral units 260. The AXI2APB bridge 250 is aware of the peripheral units 260 whose security attribute is set to "secure". When an access attempt from the non-secure world is made to a peripheral unit 260 whose security attribute is set to "secure", the AXI2APB bridge 250 rejects the access attempt. For example, the TZPC 241 may set the security attribute of the touchscreen 120 to "secure". The non-secure core processor 213 executing a hacking program may place a request for access to the touchscreen 120 on the AXI bus 245. In response to the request for access to the touchscreen 120 from the non-secure core processor 213, the AXI2APB bridge 250 checks the security attribute of the touchscreen 120. When the security attribute of the touchscreen 120 is set to "secure", the AXI2APB bridge 250 rejects the access request. Hence, the AXI2APB bridge 250 prevents a non-secure program from accessing the touchscreen 120 for stealing information. The AXI2APB bridge 250 may allow only the secure core processor 211 to place a request for information on the touchscreen 120.

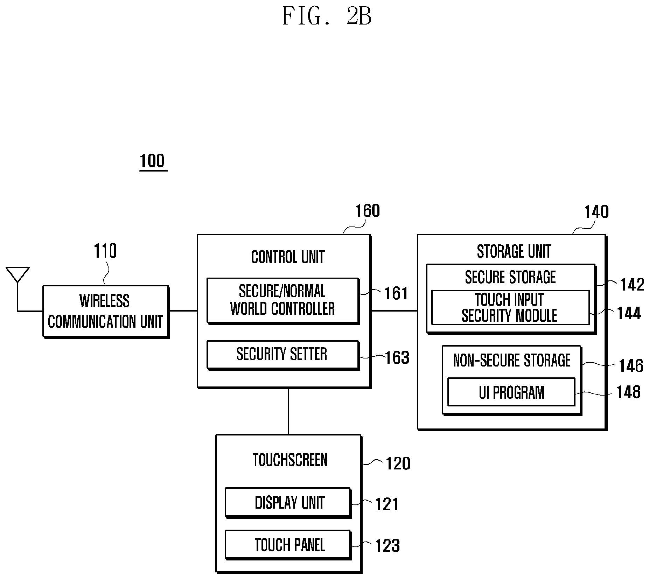

FIG. 2B is a block diagram illustrating a mobile terminal according to an embodiment of the present invention.

Referring to FIG. 2B, a mobile terminal 100 includes a wireless communication unit 110, a touchscreen 120, a storage unit 140, and a control unit 160. Although not shown in FIG. 2B, the mobile terminal 100 may further include other elements, such as a key input unit and an audio processing unit.

The wireless communication unit 110 establishes communication channels for voice calls, video calls, and data calls under the control of the control unit 160. In particular, the wireless communication unit 110 establishes a data communication channel to a web server or another mobile terminal and sends touch input information, such as user's personal information, through the data communication channel.

The touchscreen 120 includes a display unit 121 and a touch panel 123. The touchscreen 120 may be configured so that the touch panel 123 covers the display unit 121. The size of the touchscreen 120 may be determined by the size of the touch panel 123. The touchscreen 120 displays application screens in the secure and non-secure worlds, and senses a touch with an object. In particular, the touchscreen 120 displays a Graphical User Interface (GUI) for touch input, and obtains a touch input corresponding to touch of a user object (e.g. finger or stylus), and obtains other information through the GUI.

The display unit 121 displays various menus of the mobile terminal 100, information input by the user, and information to be provided to the user. The display unit 121 outputs execution screens of various user functions in the course of utilizing the mobile terminal 100. The display unit 121 may be realized using a device, such as a Liquid Crystal display (LCD) devices or organic light emitting diodes (OLED). The display unit 121 may be placed above or below the touch panel 123. In particular, the display unit 121 supports a display feature wherein a non-secured screen is overlaid with a secured screen, such that the secured screen is rendered in the secure overlay frame buffer, and the non-secured screen is rendered in the non-secure overlay frame buffer. The display unit 121 displays the secured screen on the non-secured screen in an overlay form by merging contents of the secure overlay frame buffer and non-secure overlay frame buffer.

The touch panel 123 is placed at a lower or upper portion of the display unit 121. Sensors included in the touch panel 123 are arranged in a matrix form. The touch panel 123 generates a touch signal corresponding to contact or proximity between an object and the touch panel 123, and sends the touch signal to the control unit 160.

In particular, the security attribute of the touch panel 123 is set to "secure" by the control unit 160. When the security attribute of the touch panel 123 is set to "secure", the touch panel 123 can only be used in the secure world and cannot be used in the non-secure world. Hence, the touch panel 123 whose security attribute is set to "secure" is protected from non-secure programs such as hacking programs.

In addition, the security attribute of an interrupt line connected to the touch panel 123 is changeable. When the security attribute of the interrupt line connected to the touch panel 123 is set to "secure", an interrupt signal (i.e., a touch input signal) from the touch panel 123 is sent to the control unit 160 in the secure world. Hence, when the user touches the touch panel 123 with an object to enter information requiring security, such as personal information or passcodes, the touch input is forwarded to the control unit 160 in the secure world. As the control unit 160 operating in the non-secure world is incapable of recognizing such touch input, a non-secure program cannot identify such touch input. Embodiments of the present invention may ensure security of input information via the touch panel 123 and interrupt line, whose security attribute is set to "secure".

The storage unit 140 stores at least one application program needed to perform secure world functions and non-secure world functions according to embodiments of the present invention, and also stores user data such as messages and application data. The storage unit 140 includes a secure storage 142 and a non-secure storage 146.

The secure storage 142 corresponds to the secure ROM 221 and secure RAM 223 of FIG. 2A. The secure storage 142 is mounted in the mobile terminal 100 such that the secure storage 142 is isolated by hardware and software mechanisms. The secure storage 142 stores an operating system for the secure world and information regarding secure application programs. Access to the secure storage 142 from the control unit 160 operating in the non-secure world is physically prohibited. As the secure storage 142 in this example has a limited capacity by design, the security storage 142 stores a secure application program having a simple function and associated data. In particular, the secure storage 142 further stores a touch input security module 144. The secure storage 142 further stores a monitor program to support transition between the secure world and the non-secure world.

The touch input security module 144 includes a routine for displaying a secured screen above a non-secured screen as an overlay and ensuring security of touch signals. The touch input security module 144 includes a routine for displaying a secured screen containing a virtual input pad. The touch input security module 144 includes a routine for setting the security attribute of peripheral units related to touch input and of the data bus, a routine for displaying a secured input screen by rendering a secured screen in the secure storage 142 and by outputting the secured screen above a non-secured screen as an overlay, and a routine for receiving and processing a secured touch signal. Herein, the secured input screen refers to display of a secured screen above a non-secured screen as an overlay, and the secured screen may have a virtual input pad.

The non-secure storage 146 includes a program region and a data region (not shown).

The program region stores an operating system for booting the mobile terminal 100 and operating individual components thereof in the non-secure world, and non-secure application programs that are downloaded or pre-installed. In particular, the program region may store a User Interface (UI) program 148.

The UI program 148 initiates a secured input mode, and renders a non-secured screen among execution screens of a given application program in the non-secure world. In the secured input mode, security of information input through the touch panel 123 is ensured, or at least increased relative to security of information input in the related art. According to embodiments of the present invention, a secured input screen is displayed in the secured input mode. The UI program 148 renders a non-overlay screen among application screens as a non-secured screen, and renders a screen that does not contain an input pad among overlay screens as a non-secured screen. The UI program 148 may be contained as a part in an application program requiring PIN code input or contained in an application program requiring alphanumeric input such as a document or message handling program. An application program containing the UI program 148 transitions, in response to a request for entering specific touch keys mapped with characters or numerals, to the secured input mode, and supports rendering in the non-secure world.

Although not intended, the program region may store an unauthorized hacking program. The hacking program executes in the non-secure world. Hence, various personal information located in the non-secure world may be leaked by the hacking program. However, according to embodiments of the present invention, as the apparatus for securing touch input receives and processes a touch signal in the secure world, embodiments of the present invention can protect information input through the touch panel 123 from an attack made by a hacking program running in the non-secure world.

The data region stores data generated in the course of utilizing the mobile terminal 100. In particular, the data region stores data that is used or generated by the UI program 148 during execution. For example, the data region may buffer or store a Graphical User Interface (GUI) to be displayed during execution of the UI program 148. Accordingly, the data region includes an overlay frame buffer whose security attribute is settable.

The security attribute of the data region itself, as well as portions thereof, are settable. When the security attribute of the data region is set to "secure", the control unit 160 only accesses the data region in the secure world. Hence, a non-secure program cannot access the data region when the security attribute of the data region is set to "secure". In particular, a part of the data region used by the touch input security module 144 may be set for security by the control unit 160.

The control unit 160 controls the overall operation of the mobile terminal 100. In particular, the control unit 160 supports the secure world and non-secure world, displays a secured input screen having a secured screen as an overlay, and ensures security of touch signals, thereby preventing theft of information input through the touch panel 123. To prevent the theft of information, the control unit 160 includes a secure/normal world controller 161 and a security setter 163.

The secure/normal world controller 161 includes a virtual secure world controller, a virtual normal world controller, and a security world switcher (not shown). The secure/normal world controller 161 corresponds to the core processor 210 of FIG. 2A. The virtual secure world controller executes a secure program on top of the secure operating system in the secure world.

According to an embodiment of the present invention, the virtual secure world controller executes the touch input security module 144. Hence, the virtual secure world controller controls the display unit 121 to display a secured screen above a non-secured screen as an overlay, and receives and processes secured touch input signals in the secure world.

The virtual normal world controller executes a normal non-secure program on top of the non-secure operating system. In particular, the virtual normal world controller executes the UI program 148 in the non-secure world. Hence, the virtual normal world controller initiates the secured input mode in response to a request for secured input.

The security world switcher executes a monitor program to schedule and control transitions between roles of the virtual secure world controller and the virtual normal world controller in a time sliced fashion. The monitor program is stored in the secure storage 142. When a transition occurs between the secure world and the non-secure world, the monitor program saves the state of the previous world. For world transition, the monitor program may assume a role at least partly in clearing registers, restoring current contexts and saving previous contexts. In particular, the security world switcher transitions to the secure world in response to a secure input request in the non-secure world.

The security setter 163 sets security attributes of the components of the mobile terminal 100. When the security setter 163 sets the security attribute of one component to "secure", the component is usable only in the secure world. The security setter 163 corresponds to the TZIC 243, TZAC 231, and the TZPC 241 of FIG. 2A. In particular, the security setter 163 sets security attributes of the touch panel 123, the interrupt line connected to the touch panel 123, and a portion of the data region associated with the touch input security module 144.

A method for securing touch input according to an embodiment of the present invention is described as follows.

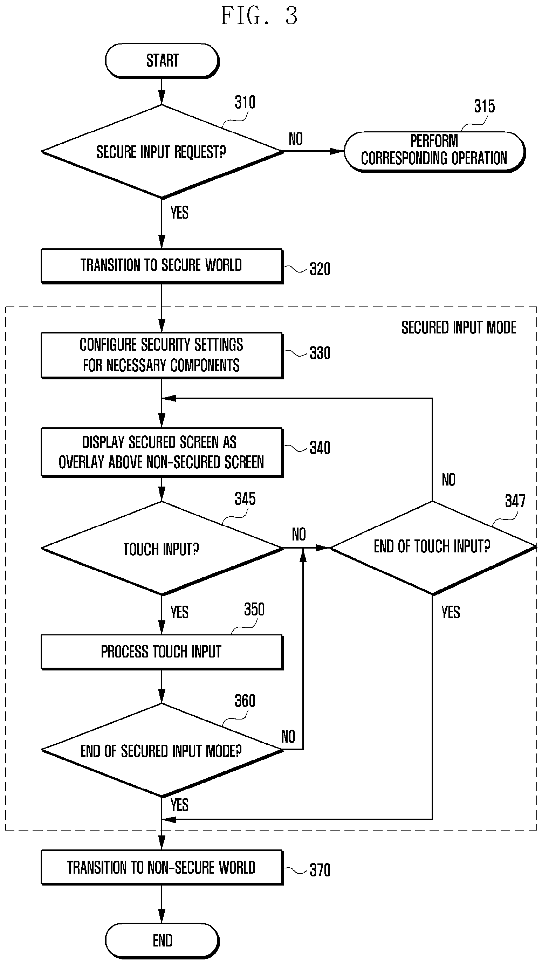

FIG. 3 is a flowchart illustrating a method for secured input through a touch panel according to another embodiment of the present invention.

Referring to FIG. 3, the method begins from the non-secure world. The control unit 160 checks whether a secure input request is received, in step 310. A secure input request involves displaying a secured input screen. When a secure input request is received, the control unit 160 transitions to the secure world, in step 320. When an input other than a secure input request is received, the control unit 160 performs an operation corresponding to the received input, in step 315.

After entering the secure world, the control unit 160 executes the touch input security module 144 stored in the secure storage 142 to thereby perform secured input mode operations. Operations performed in the secured input mode correspond to steps 330 to 360.

The control unit 160 configures security settings for touch input, in step 330. For example, the control unit 160 may set the security attribute of a region of the storage unit 140 and the touchscreen 120 related to touch input to "secure". The control unit 160 controls the display unit 121 to output a secured input screen by displaying a secured screen above a non-secured screen as an overlay, in step 340. Here, the secured screen is rendered in the secure overlay frame buffer, the non-secured screen is rendered in the non-secure overlay frame buffer, and the secured screen is displayed above the non-secured screen as an overlay to form the secured input screen.

The control unit 160 checks whether a touch input is received within a preset duration, in step 345. Here, the control unit 160 may receive a touch input from the touch panel 123. When a touch input is not received within the preset duration, the control unit 160 checks whether a touch input period has ended, in step 347. The control unit 160 may determine whether the touch input period has ended on the basis of expiration of a given time duration or a preset end key entered by the user. Upon a determination that the touch input period has not ended, the control unit 160 returns to step 340 and outputs the secured input screen. Upon determining that the touch input period has ended, the control unit 160 transitions back to the non-secure world, in step 370.

When a touch input is received, the control unit 160 processes the touch input in the secure world, in step 350. Here, referring to the layout (i.e., elements) of the secured screen, the control unit 160 identifies the element at which a touch is entered and identifies information entered by the user in the secure world. Thereafter, the control unit 160 checks whether to end the secured input mode, in step 360. Here, the control unit 160 may determine whether to terminate the secured input mode on the basis of a preset number of inputs or expiration of a given duration. When the secured input mode has ended, the control unit 160 transitions back to the non-secure world, in step 370. When the secured input mode has not ended, the control unit 160 returns to step 347 and checks whether the touch input period has ended.

After transitioning back to the non-secure world, the procedure for secured touch input ends. As described above, an embodiment of the present invention supports secured input using the procedure of FIG. 3.

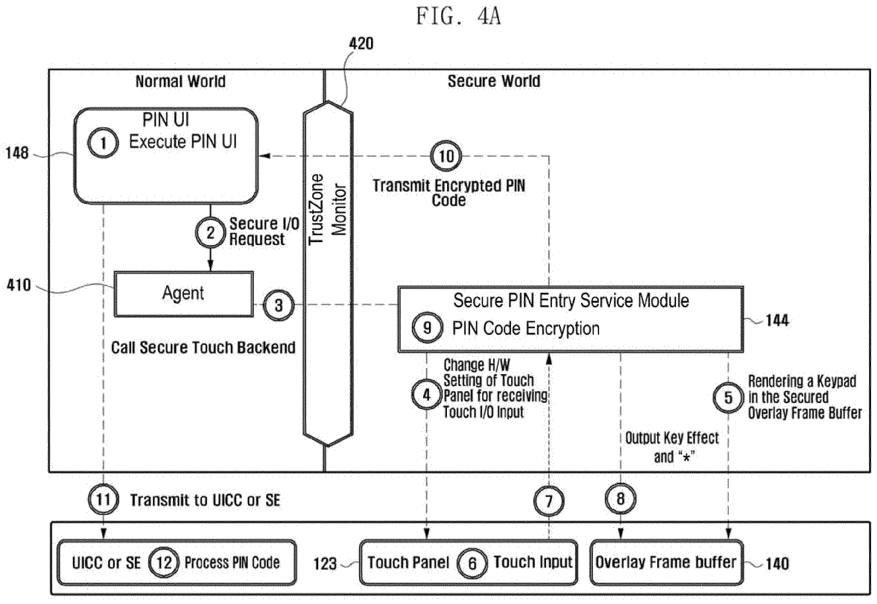

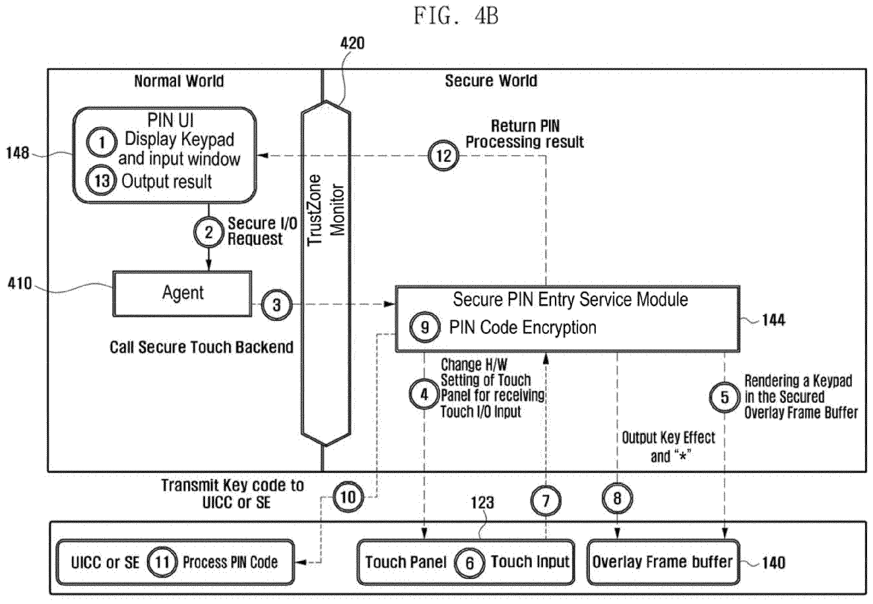

A method for secured touch input may be implemented using a software architecture shown in FIG. 4A or 4B.

FIG. 4A is a diagram illustrating a software architecture supporting the method for secured touch input in FIG. 3 according to an embodiment of the present invention. In the present example, the software architecture is assumed to support electronic payment in a smartphone employing TrustZone Technology of ARM Holdings, but other technologies may be used in other embodiments of the present invention. The skilled will appreciate that some or part of the software architecture described herein could be replaced with corresponding hardware architecture.

Referring to FIG. 4A, the software architecture includes a PIN UI program 148, an agent 410, and a PIN code input security module 144. A TrustZone monitor 420 is present between the secure world and the non-secure (normal) world. The PIN UI program 148 is stored in the non-secure storage 146, and receives a PIN code input request for electronic payment. The agent 410 operates in the non-secure world and invokes a specific program in the secure world. The PIN code input security module 144 is stored in the secure storage 142, and displays a virtual keypad and processes an input PIN code.

Interactions between components of the software architecture according to an embodiment of the present invention is described as follows.

The PIN UI program 148 is executed, at step (1). In response to user input, the PIN UI program 148 sends a secure I/O request to the agent 410, at step (2). For example, when the user enters a button for electronic payment after finishing online shopping, the PIN UI program 148 sends a secure I/O request to the agent 410. In return, the agent 410 invokes the secure touch backend, in step (3), thereby initiating the PIN code input security module 144 in the secure world. More specifically, the agent 410 requests a transition from the non-secure world to the secure world by invoking a Secure Monitor Call (SMC). Upon SMC invocation, a transition occurs from the non-secure world to the secure world, and the TrustZone monitor 420 is executed. The TrustZone monitor 420 stores register contents of the non-secure core processor 213 in a given stack. This storage enables restoration of non-secure world states after transitioning back to the non-secure world. After storing the register contents of the non-secure core processor 213, the TrustZone monitor 420 supports execution of the PIN code input security module 144.

In the secure world, a secured keypad is displayed, and a PIN code is received and processed, in steps (4) to (10). The PIN code input security module 144 sets the security attribute (changes hardware settings) of the touch panel 123 to "secure" so as to receive touch input in the secure world, in step (4). Here, the PIN code input security module 144 drives the TZPC 241, TZIC 243, and TZASC 231 to change security attributes of the touch panel 123, the interrupt line connected to the touch panel 123, and the overlay frame buffer. The PIN code input security module 144 controls an operation to render a keypad screen for PIN code input in the secure overlay frame buffer, not in the non-secure overlay frame buffer, in step (5).

After output of the keypad screen, the user touches keys displayed on the touchscreen 120 with a touch object to enter a PIN code, in step (6). The PIN code input security module 144 receives secured touch input, in step (7), and outputs a character '*' as an indication of key input from the user, in step (8). The PIN code input security module 144 encrypts the touch input, (i.e., a PIN code, in step (9).

Steps (6) to (9) are repeated until a preset number of digits forming a PIN code are input. Step (9) is performed after a preset number of digits are input. Step (8) may be performed in the non-secure world.

After PIN code input, the PIN code input security module 144 sends the encrypted PIN code to the PIN UI program 148, in step (10). The PIN UI program 148 forwards the encrypted PIN code to a touch input processing device such as a Universal Integrated Circuit Card (UICC) or Secure Element (SE), in step (11). Here, the SE is a combination of a Subscriber Identity Module (SIM) containing subscriber information and a UICC, and is also referred to as a Universal Subscriber Identity Module (USIM). The UICC or the SE processes and validates the PIN code, in step (12). Here, the encrypted PIN code may be decrypted and compared with a pre-stored passcode.

According to another embodiment of the present invention, after the PIN code is input, an encrypted PIN code may be sent directly to the UICC or the SE in the secure world (bypassing the non-secure world).

A method for transmitting an encrypted PIN code directly to the UICC or the SE is described as follows with reference to FIG. 4B. As steps (1) to (9) in FIG. 4B are identical respectively to steps (1) to (9) in FIG. 4A, a description thereof is omitted for conciseness.

Referring to FIG. 4B, after the PIN code is input, the PIN code input security module 144 sends the encrypted PIN code directly to the UICC or SE (i.e., not via the PIN UI program 148), in step (10). In this case, PIN code transmission is performed in the secure world, providing a higher level of security.

The UICC or SE processes and validates the PIN code, in step (11). When the UICC or SE notifies the PIN code input security module 144 of the PIN processing result, the PIN code input security module 144 forwards the PIN processing result to the PIN UI program 148, in step (12). Finally, the PIN UI program 148 causes the PIN processing result to be displayed on the display unit 121, in step (13). Hence, the user is informed of the result of PIN code input through the PIN UI program 148.

As described above, embodiments of the present invention can be applied to an electronic payment application based on a given software architecture, hardware architecture, or combination thereof.

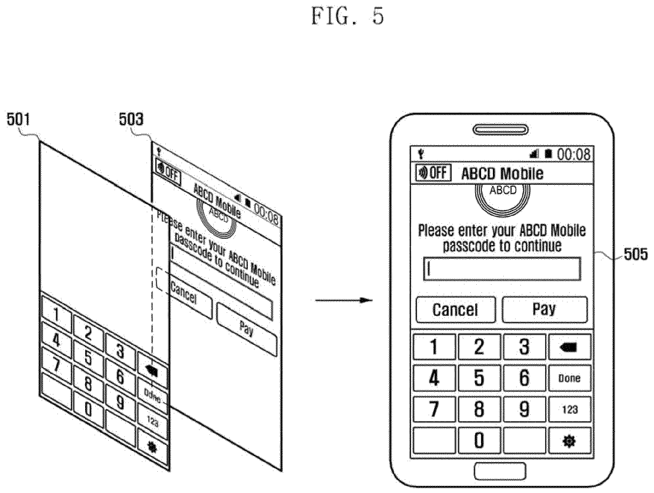

FIG. 5 is a diagram illustrating a touch input screen that depicts implemented by a mobile terminal on the basis of the software architecture of FIG. 4A or 4B according to an embodiment of the present invention.

Referring to FIG. 5, the mobile terminal 100 of FIG. 1, which employs the software architecture of FIG. 4A or 4B, outputs a secured input screen 505 by displaying a secured keypad screen 501 above an execution screen 503 of the PIN UI program 148 as an overlay. In addition, the mobile terminal 100 sets the security attribute of the interrupt line connected to the touch panel 123 to "secure".

As described above, according to an embodiment of the present invention, a secured keypad screen 501 is displayed above an application screen 503 as an overlay to thereby form a secured input screen 505. Hence, security of touch input is ensured and PIN code information input through the touch panel 123 can be protected from theft. As a result, embodiments of the present invention can preserve existing PIN code input schemes while protecting safety of input information from a hacking program.

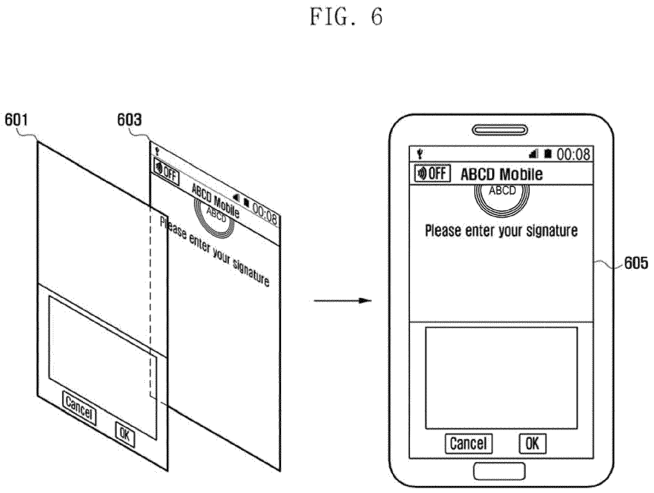

In another example according to an embodiment of the present invention, an electronic payment application requires a signature instead of a PIN code. In such a case, as shown in FIG. 6, the mobile terminal 100 uses a secured drawing-pad screen 603 instead of the secured keypad screen 501.

FIG. 6 is a diagram illustrating a touch input screen using a drawing-pad according to an embodiment of the present invention.

Referring to FIG. 6, the mobile terminal 100 employing the software architecture of FIG. 4A or 4B (or corresponding hardware architecture) outputs a secured input screen 605 by displaying a secured drawing-pad screen 601 above an execution screen 603 of the PIN UI program 148 as an overlay. The mobile terminal 100 may render the secured drawing-pad screen 601 in the secure world. When rendering the secured drawing-pad screen 601 in the secure world, the mobile terminal 100 protects security of a signature (touch signal) input through the touch panel 123.

As described above, according to embodiments of the present invention, different virtual input pads are used in secured screens for various types of application programs. For example, the secured input mode can be supported by electronic payment application programs, application programs requiring PIN code input such as a terminal locking program and access blocking program against a given application, and application programs requiring alphanumeric input such as a document writing program and a message composition program.

As described above, in a method and apparatus for securing touch input according to an embodiment of the present invention, a secured input screen is formed by displaying a secured screen as an overlay on a non-secured screen, and security of touch input is ensured. Thereby, theft of information input through the touch panel 123 by a hacking program is prevented.

Embodiments of the present invention may be applied, not only to application programs requiring PIN code input, but also to other application programs requiring alphanumeric input. When the user enters characters or digits on the touch panel, embodiments of the present invention can ensure security of touch signals generated by the touch panel and ensure security of input pad layout information. Hence, embodiments of the present invention can prevent theft of information input through the touch panel.

In a feature of embodiments of the present invention, when sensitive data is to be entered, the security method and apparatus can output a secured screen on top of a normal non-secured screen and secure touch input so as to prevent theft of information that is input through the touch panel. Hence, personal information entered through the touch panel can be protected from a hacking program.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

The invention is defined by the appended claims.

## Claims

1. A method for securing touch input, comprising:
rendering, in a secure operating environment a user input screen (10) for accepting a touch input via a touch panel;
rendering, in a non-secure operating environment, an execution screen (20) of a user interface program requiring the touch input; and
outputting (340) a secured input screen by displaying the user input screen (10) as an overlay above the execution screen (20),
wherein a non-secure application program running in the non-secure application environment is prevented from accessing secure data stored in the secure application environment, and
wherein a security attribute of the touch panel is set to secure, and access to the touch panel and the touch input is limited to the secure operating environment when the security attribute of the touch panel is set to secure.

2. The method of claim 1, further comprising:
identifying (350) input information with reference to the touch input and the user input screen (10).

3. The method of any preceding claim, wherein the user input screen (10, 501) contains a virtual input pad at a portion thereof.

4. The method of claim 3, wherein the virtual input pad is one of a keypad and a drawing pad.

5. The method of any preceding claim, wherein outputting (340) the secured input screen comprises displaying the user input screen (10) as a topmost overlay.

6. The method of any preceding claim, wherein the secured input screen is output (340) in response to reception (310) of a secure input request.

7. An apparatus (100) for securing touch input, comprising:
a touchscreen (120) comprising a touch panel (123) and a display unit (121), the display unit (121) being configured to output a secured input screen;
a secure overlay frame buffer configured to render a user input screen (10) in a secure application environment, the user input screen being for accepting the touch input via the touch panel;
a non-secure overlay frame buffer configured to render an execution screen (20) in a non-secure application environment, the execution screen being of a user interface program requiring the touch input; and
a control unit (160) configured to control the display unit (121) to display the user input screen (10) as an overlay above the execution screen (20) so as to produce the secured input screen,
wherein the control unit is configured such that a non-secure application program running in the non-secure application environment is prevented from accessing secure data stored in the secure application environment, and
wherein the control unit is configured to set a security attribute of the touchscreen to secure, and access to the touchscreen and the touch input is limited to the secure operating environment when the security attribute of the touchscreen is set to secure.

8. The apparatus of claim 7, wherein the control unit (160) is further configured to set a security attribute of the secure overlay frame buffer.

9. The apparatus of claim 7 or 8, further comprising an interrupt line that is connected to the touch panel (123),
wherein the control unit (160) is configured to deliver the touch input to the control unit (160) and set a security attribute of the interrupt line.

10. The apparatus of any of claims 7 to 9, wherein the control unit (160) is configured to set, in response to reception of a secure input request, the security attribute of the secure overlay frame buffer and touch panel (123).

11. The apparatus of any of claims 7 to 10, wherein the control unit (160) is configured to identify security information input through the touch panel (123) with reference to the user input screen (10) and the touch input.

12. The apparatus of claim 11, wherein the control unit (160) is configured to identify the security information in the secure application environment.

13. The apparatus of claim 12, wherein the control unit (160) is configured to encrypt the security information in the secure application environment, and forward the encrypted security information to at least one of a Universal Integrated Chip Card, UICC, and a Secure Element, SE, in the secure operating environment or a non-secure operating environment.

14. The apparatus of claim 13, wherein the at least one of the UICC and the SE is configured to decrypt the encrypted security information and determine whether the decrypted security information matches a preset passcode.

15. The apparatus of any of claims 7 to 14, wherein the user input screen (10) contains a virtual input pad at a portion thereof.

16. The apparatus of claim 15, wherein the virtual input pad is one of a keypad and a drawing pad.

17. The apparatus of any of claims 7 to 16, wherein the control unit (160) is configured to control the display unit (121) to display the user input screen (10) as a topmost overlay on the secured input screen.

18. The apparatus of any of claims 7 to 17, wherein the control unit (160) further comprises:
an address space controller configured to configure a portion of a storage unit (140) as a secure region (142), prevent the non-secure core processor from accessing the secure region (142) of the storage unit (140), and support the secure core processor in accessing the secure region (142) of the storage unit (140);
a protection controller configured to set security attributes of peripheral units;
a bridge configured to prevent the non-secure core processor from accessing peripheral units (260) whose security attributes are set as secured, and support the secure core processor in access to peripheral units whose security attributes are set as secured; and
an interrupt controller configured to set security attributes of interrupt lines, prevent the non-secure core processor from accessing interrupt lines whose security attributes are set as secured, and support the secure core processor in access to interrupt lines whose security attributes are set as secured.

19. The apparatus of claim 18, wherein the protection controller is further configured to set a security attribute of a touchscreen (120) having a display unit (121) and a touch panel (123).

20. The apparatus of claim 19, wherein the interrupt controller is further configured to set security attributes of interrupt lines connected with the touchscreen (120).

21. The apparatus of claim 7, further comprising:
a secure storage for storing a Personal Identification Number, PIN, code input security module; and
a non-secure storage for storing a PIN User Interface, UI, program and an agent;
wherein the control unit (160) is configured to control the touchscreen (120), secure storage, and non-secure storage,
wherein the PIN UI program is configured to send a secure Input/Output, I/O, request to the agent in response to user input, the agent is configured to initiate the PIN code input security module in response to the secure I/O request, and the PIN code input security module is configured to set a security attribute of the touch panel (123) as secured, direct the secure overlay frame buffer to render a keypad screen, receive touch input from the touch panel (123) whose security attribute is set as secured, and forward the received touch input to the PIN UI program or a touch input processing device.

22. The apparatus of claim 21, wherein the touch input processing device is one of a Universal Integrated Circuit Card, UICC, and a Secure Element, SE.

23. The apparatus of claim 21 or 22, wherein the PIN code input security module is configured to output symbols corresponding to the touch input to the secure overlay frame buffer.

24. The apparatus of claim 21, 22 or 23, wherein the PIN code input security module is configured to encrypt the received touch input and sends the encrypted touch input to the PIN UI program or to the touch input processing device.

## Patentansprüche

1. Verfahren zur Sicherung von Berührungseingaben, umfassend:
Wiedergeben, in einer sicheren Betriebsumgebung, eines Nutzereingabeschirms (10) zum Annehmen einer Berührungseingabe über ein Touchpanel;
Wiedergeben, in einer nicht sicheren Betriebsumgebung, eines Ausführungsschirms (20) eines Nutzerschnittstellenprogramms, das die Berührungseingabe benötigt; und
Ausgeben (340) eines gesicherten Eingabeschirms durch Anzeigen des Nutzereingabeschirms (10) als Überlagerung über dem Ausführungsschirm (20),
wobei verhindert wird, dass ein in der nicht sicheren Anwendungsumgebung laufendes nicht sicheres Anwendungsprogramm auf sichere Daten zugreift, die in der sicheren Anwendungsumgebung gespeichert sind, und
wobei ein Sicherheitsattribut des Touchpanels auf sicher eingestellt ist und der Zugriff auf das Touchpanel und die Berührungseingabe auf die sichere Betriebsumgebung begrenzt ist, wenn das Sicherheitsattribut des Touchpanels auf sicher eingestellt ist.

2. Verfahren nach Anspruch 1, ferner umfassend:
Identifizieren (350) von Eingabeinformationen unter Bezug auf die Berührungseingabe und den Nutzereingabeschirm (10).

3. Verfahren nach einem der vorstehenden Ansprüche, wobei der Nutzereingabeschirm (10, 501) in einem Abschnitt davon ein virtuelles Eingabefeld enthält.

4. Verfahren nach Anspruch 3, wobei das virtuelle Eingabefeld eines eines Tastenfelds und eines Zeichenfelds ist.

5. Verfahren nach einem der vorstehenden Ansprüche, wobei das Ausgeben (340) des gesicherten Eingabeschirms das Anzeigen des Nutzereingabeschirms (10) als oberste Überlagerung umfasst.

6. Verfahren nach einem der vorstehenden Ansprüche, wobei der gesicherte Eingabeschirm in Reaktion auf den Empfang (310) einer sicheren Eingabeanfrage ausgegeben (340) wird.

7. Vorrichtung (100) zur Sicherung von Berührungseingaben, umfassend:
einen Touchscreen (120), umfassend ein Touchpanel (123) und eine Anzeigeeinheit (121), wobei die Anzeigeeinheit (121) konfiguriert ist, um einen gesicherten Eingabeschirm auszugeben;
einen sicheren Überlagerungsrahmenzwischenspeicher, der konfiguriert ist, um einen Nutzereingabeschirm (10) in einer sicheren Anwendungsumgebung wiederzugeben, wobei der Nutzereingabeschirm zum Annehmen der Berührungseingabe über das Touchpanel vorgesehen ist;
einen nicht sicheren Überlagerungsrahmenzwischenspeicher, der konfiguriert ist, um einen Ausführungsschirm (20) in einer nicht sicheren Anwendungsumgebung wiederzugeben, wobei der Ausführungsschirm aus einem Nutzerschnittstellenprogramm ist, das die Berührungseingabe benötigt; und
eine Steuereinheit (160), die konfiguriert ist, um die Anzeigeeinheit (121) zu steuern, um den Nutzereingabeschirm (10) als eine Überlagerung über dem Ausführungsschirm (20) anzuzeigen, um den gesicherten Eingabeschirm zu erzeugen,
wobei die Steuereinheit so konfiguriert ist, dass verhindert wird, dass ein in der nicht sicheren Anwendungsumgebung laufendes nicht sicheres Anwendungsprogramm auf sichere Daten zugreift, die in der sicheren Anwendungsumgebung gespeichert sind, und
wobei die Steuereinheit konfiguriert ist, um ein Sicherheitsattribut des Touchscreens auf sicher einzustellen und der Zugriff auf den Touchscreen und die Berührungseingabe auf die sichere Betriebsumgebung begrenzt ist, wenn das Sicherheitsattribut des Touchscreens auf sicher eingestellt ist.

8. Vorrichtung nach Anspruch 7, wobei die Steuereinheit (160) ferner konfiguriert ist, um ein Sicherheitsattribut des sicheren Überlagerungsrahmenzwischenspeichers einzustellen.

9. Vorrichtung nach Anspruch 7 oder 8, ferner umfassend eine Unterbrechungsleitung, die mit dem Touchpanel (123) verbunden ist,
wobei die Steuereinheit (160) konfiguriert ist, um die Berührungseingabe zur Steuereinheit (160) zu liefern und ein Sicherheitsattribut der Unterbrechungsleitung einzustellen.

10. Vorrichtung nach einem der Ansprüche 7 bis 9, wobei die Steuereinheit (160) konfiguriert ist, um in Reaktion auf den Empfang einer sicheren Eingabeanfrage das Sicherheitsattribut des sicheren Überlagerungsrahmenzwischenspeichers und Touchpanels (123) einzustellen.

11. Vorrichtung nach einem der Ansprüche 7 bis 10, wobei die Steuereinheit (160) konfiguriert ist, um über das Touchpanel (123) eingegebene Sicherheitsinformationen unter Bezug auf den Nutzereingabeschirm (10) und die Berührungseingabe zu identifizieren.

12. Vorrichtung nach Anspruch 11, wobei die Steuereinheit (160) konfiguriert ist, um die Sicherheitsinformationen in der sicheren Anwendungsumgebung zu identifizieren.

13. Vorrichtung nach Anspruch 12, wobei die Steuereinheit (160) konfiguriert ist, um die Sicherheitsinformationen in der sicheren Anwendungsumgebung zu verschlüsseln und die verschlüsselten Sicherheitsinformationen an mindestens eines einer UICC-(Universal Integrated Chip Card)-Karte und eines sicheren Elements (SE) in der sicheren Betriebsumgebung oder einer nicht sicheren Betriebsumgebung weiterzuleiten.

14. Vorrichtung nach Anspruch 13, wobei das mindestens eine der UICC und des SE konfiguriert ist, um die verschlüsselten Sicherheitsinformationen zu entschlüsseln und zu ermitteln, ob die entschlüsselten Sicherheitsinformationen mit einem voreingestellten Kennwort übereinstimmen.

15. Vorrichtung nach einem der Ansprüche 7 bis 14, wobei der Nutzereingabeschirm (10) in einem Abschnitt davon ein virtuelles Eingabefeld enthält.

16. Vorrichtung nach Anspruch 15, wobei das virtuelle Eingabefeld eines eines Tastenfelds und eines Zeichenfelds ist.

17. Vorrichtung nach einem der Ansprüche 7 bis 16, wobei die Steuereinheit (160) konfiguriert ist, um die Anzeigeeinheit (121) zu steuern, um den Nutzereingabeschirm (10) als oberste Überlagerung auf dem gesicherten Eingabeschirm anzuzeigen.

18. Vorrichtung nach einem der Ansprüche 7 bis 17, wobei die Steuereinheit (160) ferner umfasst:
eine Adressraumsteuerung, die konfiguriert ist, um einen Abschnitt einer Speichereinheit (140) als eine sichere Region (142) zu konfigurieren, den nicht sicheren Kernprozessor am Zugriff auf die sichere Region (142) der Speichereinheit (140) zu hindern und den sicheren Kernprozessor beim Zugriff auf die sichere Region (142) der Speichereinheit (140) zu unterstützen;
eine Schutzsteuerung, die konfiguriert ist, um Sicherheitsattribute von Peripherieeinheiten einzustellen;
eine Brücke, die konfiguriert ist, um den nicht sicheren Kernprozessor am Zugriff auf Peripherieeinheiten (260) zu hindern, deren Sicherheitsattribute als gesichert eingestellt sind, und den sicheren Kernprozessor beim Zugriff auf Peripherieeinheiten zu unterstützen, deren Sicherheitsattribute als gesichert eingestellt sind; und
eine Unterbrechungssteuerung, die konfiguriert ist, um Sicherheitsattribute von Unterbrechungsleitungen einzustellen, den nicht sicheren Kernprozessor am Zugriff auf Unterbrechungsleitungen zu hindern, deren Sicherheitsattribute als gesichert eingestellt sind, und den sicheren Kernprozessor beim Zugriff auf Unterbrechungsleitungen zu unterstützen, deren Sicherheitsattribute als gesichert eingestellt sind.

19. Vorrichtung nach Anspruch 18, wobei die Schutzsteuerung ferner konfiguriert ist, ein Sicherheitsattribut eines Touchscreens (120) mit einer Anzeigeeinheit (121) und einem Touchpanel (123) einzustellen.

20. Vorrichtung nach Anspruch 19, wobei die Unterbrechungssteuerung ferner konfiguriert ist, um die Sicherheitsattribute von mit dem Touchscreen (120) verbundenen Unterbrechungsleitungen einzustellen.

21. Vorrichtung nach Anspruch 7, ferner umfassend:
einen sicheren Speicher zum Speichern eines PIN-(Personal Identification Number)-Codeingabe-Sicherheitsmoduls; und
einen nicht sicheren Speicher zum Speichern eines PIN-Nutzerschnittstellen-(UI)-Programms und eines Agenten;
wobei die Steuereinheit (160) konfiguriert ist, um den Touchscreen (120), sicheren Speicher und nicht sicheren Speicher zu steuern,
wobei das PIN-UI-Programm konfiguriert ist, um in Reaktion auf eine Nutzereingabe eine sichere Eingangs-/Ausgangs-I/O-Anfrage an den Agenten zu senden, der Agent konfiguriert ist, um das PIN-Codeeingabe-Sicherheitsmodul in Reaktion auf die sichere I/O-Anfrage zu initiieren, und das PIN-Codeeingabe-Sicherheitsmodul konfiguriert ist, um ein Sicherheitsattribut des Touchpanels (123) als gesichert einzustellen, den sicheren Überlagerungsrahmenzwischenspeicher anzuleiten, einen Tastenfeldschirm wiederzugeben, eine Berührungseingabe vom Touchpanel (123), dessen Sicherheitsattribut als gesichert eingestellt ist, zu empfangen und die empfangene Berührungseingabe an das PIN-UI-Programm oder ein Berührungseingabenverarbeitungsgerät weiterzuleiten.

22. Vorrichtung nach Anspruch 21, wobei das Berührungseingabenverarbeitungsgerät eines einer UICC-(Universal Integrated Circuit Card)-Karte und eines sicheren Elements (SE) ist.

23. Vorrichtung nach Anspruch 21 oder 22, wobei das PIN-Codeeingabe-Sicherheitsmodul konfiguriert ist, um Symbole entsprechend der Berührungseingabe an den sicheren Überlagerungsrahmenzwischenspeicher auszugeben.

24. Vorrichtung nach Anspruch 21, 22 oder 23, wobei das PIN-Codeeingaben-Sicherheitsmodul konfiguriert ist, um die empfangene Berührungseingabe zu verschlüsseln, und die verschlüsselte Berührungseingabe an das PIN-UI-Programm oder das Berührungseingabenverarbeitungsgerät sendet.

## Revendications

1. Procédé de sécurisation d'une entrée tactile, comprenant :
la restitution, dans un environnement d'exploitation sécurisé d'un écran d'entrée utilisateur (10) destiné à accepter une entrée tactile via un panneau tactile ;
la restitution, dans un environnement d'exploitation non-sécurisé, d'un écran d'exécution (20) d'un programme d'interface utilisateur exigeant l'entrée tactile ; et
l'émission (340) d'un écran d'entrée sécurisé en affichant l'écran d'entrée utilisateur (10) en tant que couche superposée au-dessus de l'écran d'exécution (20),
dans lequel un programme d'application non-sécurisé exécuté dans l'environnement d'application non-sécurisé est empêché d'accéder à des données sécurisées stockées dans l'environnement d'application sécurisé, et
dans lequel un attribut de sécurité du panneau tactile est défini sur sécurisé, et l'accès au panneau tactile et à l'entrée tactile est limité à l'environnement d'exploitation sécurisé quand l'attribut de sécurité du panneau tactile est défini sur sécurisé.

2. Procédé selon la revendication 1, comprenant en outre :
l'identification (350) d'une information d'entrée en référence à l'entrée tactile et à l'écran d'entrée utilisateur (10).

3. Procédé selon l'une quelconque des revendications précédentes, dans lequel l'écran d'entrée utilisateur (10, 501) contient un pavé d'entrée virtuelle au niveau d'une partie de celui-ci.

4. Procédé selon la revendication 3, dans lequel le pavé d'entrée virtuelle est l'un d'un pavé numérique et d'un pavé de dessin.

5. Procédé selon l'une quelconque des revendications précédentes, dans lequel l'émission (340) de l'écran d'entrée sécurisé comprend l'affichage de l'écran d'entrée utilisateur (10) en tant que couche superposée la plus haute.

6. Procédé selon l'une quelconque des revendications précédentes, dans lequel l'écran d'entrée sécurisée est émis (340) en réponse à la réception (310) d'une requête d'entrée sécurisée.

7. Appareil (100) de sécurisation d'une entrée tactile, comprenant :
un écran tactile (120) comprenant un panneau tactile (123) et une unité d'affichage (121), l'unité d'affichage (121) étant configurée pour émettre un écran d'entrée sécurisé ;
une mémoire d'image de couche superposée sécurisé configurée pour restituer un écran d'entrée utilisateur (10) dans un environnement d'application sécurisé, l'écran d'entrée utilisateur étant destiné à accepter l'entrée tactile via le panneau tactile ;
une mémoire d'image de couche superposée non-sécurisé configurée pour restituer un écran d'exécution (20) dans un environnement d'application non-sécurisé, l'écran d'exécution étant d'un programme d'interface utilisateur exigeant l'entrée tactile ; et
une unité de commande (160) configurée pour commander à l'unité d'affichage (121) d'afficher l'écran d'entrée utilisateur (10) en tant que couche superposée au-dessus de l'écran d'exécution (20) de façon à produire l'écran d'entrée sécurisé,
dans lequel l'unité de commande est configurée de telle sorte qu'un programme d'application non-sécurisé exécuté dans l'environnement d'application non-sécurisé soit empêché d'accéder à des données sécurisées stockées dans l'environnement d'application sécurisé, et
dans lequel l'unité de commande est configurée pour définir un attribut de sécurité de l'écran tactile pour sécuriser, et accéder à l'écran tactile et l'entrée tactile est limitée à l'environnement d'exploitation sécurisé quand l'attribut de sécurité de l'écran tactile est défini sur sécurisé.

8. Appareil selon la revendication 7, dans lequel l'unité de commande (160) est en outre configurée pour définir un attribut de sécurité de la mémoire d'image de couche superposée sécurisée.

9. Appareil selon la revendication 7 ou 8, comprenant en outre une ligne d'interruption qui est connectée au panneau tactile (123),
dans lequel l'unité de commande (160) est configurée pour délivrer l'entrée tactile à l'unité de commande (160) et définir un attribut de sécurité de la ligne d'interruption.

10. Appareil selon l'une quelconque des revendications 7 à 9, dans lequel l'unité de commande (160) est configurée pour définir, en réponse à la réception d'une requête d'entrée sécurisée, l'attribut de sécurité de la mémoire d'image de couche superposée sécurisée et du panneau tactile (123).

11. Appareil selon l'une quelconque des revendications 7 à 10, dans lequel l'unité de commande (160) est configurée pour identifier une entrée d'information de sécurité par le biais du panneau tactile (123) en référence à l'écran d'entrée utilisateur (10) et l'entrée tactile.

12. Appareil selon la revendication 11, dans lequel l'unité de commande (160) est configurée pour identifier l'information de sécurité dans l'environnement d'application sécurisé.

13. Appareil selon la revendication 12, dans lequel l'unité de commande (160) est configurée pour crypter l'information de sécurité dans l'environnement d'application sécurisé, et transférer l'information de sécurité cryptée à au moins l'un d'une carte universelle de circuit intégré, UICC, et un élément sécurisé, SE, dans l'environnement d'exploitation sécurisé ou un environnement d'exploitation non-sécurisé.

14. Appareil selon la revendication 13, dans lequel l'au moins l'un de l'UICC et du SE est configuré pour décrypter l'information de sécurité cryptée et déterminer si l'information de sécurité décryptée correspond à un code de verrouillage prédéfini.

15. Appareil selon l'une quelconque des revendications 7 à 14, dans lequel l'écran d'entrée utilisateur (10) contient un pavé d'entrée virtuelle au niveau d'une partie de celui-ci.

16. Appareil selon la revendication 15, dans lequel le pavé d'entrée virtuelle est l'un d'un pavé numérique et d'un pavé de dessin.

17. Appareil selon l'une quelconque des revendications 7 à 16, dans lequel l'unité de commande (160) est configurée pour commander à l'unité d'affichage (121) d'afficher l'écran d'entrée utilisateur (10) en tant que couche superposée la plus haute sur l'écran d'entrée sécurisée.

18. Appareil selon l'une quelconque des revendications 7 à 17, dans lequel l'unité de commande (160) comprend en outre :
un contrôleur d'espace d'adresse configuré pour configurer une partie d'une unité de stockage (140) en tant que zone sécurisée (142), empêcher le processeur principal non-sécurisé d'accéder à la zone sécurisée (142) de l'unité de stockage (140), et supporter le processeur principal sécurisé à accéder à la zone sécurisée (142) de l'unité de stockage (140) ;
un contrôleur de protection configuré pour définir des attributs de sécurité d'unités périphériques ; un pont configuré pour empêcher le processeur principal non-sécurisé d'accéder aux unités périphériques (260) dont les attributs de sécurité sont définis sur sécurisés, et supporter le processeur principal sécurisé à accéder aux unités périphériques dont les attributs de sécurité sont définis sur sécurisés ; et
un contrôleur d'interruption configuré pour définir des attributs de sécurité de lignes d'interruption, empêcher le processeur principal non-sécurisé d'accéder aux lignes d'interruption dont les attributs de sécurité sont définis sur sécurisés, et aider le processeur principal sécurisé à accéder aux lignes d'interruption dont les attributs de sécurité sont définis sur sécurisés.

19. Appareil selon la revendication 18, dans lequel le contrôleur de protection est en outre configuré pour définir un attribut de sécurité d'un écran tactile (120) possédant une unité d'affichage (121) et un panneau tactile (123).

20. Appareil selon la revendication 19, dans lequel le contrôleur d'interruption est en outre configuré pour définir des attributs de sécurité de lignes d'interruption connectées à l'écran tactile (120).

21. Appareil selon la revendication 7, comprenant en outre :
un stockage sécurisé destiné à stocker un module de sécurité à entrée par code à numéro d'identification personnel, PIN ; et
un stockage non-sécurisé destiné à stocker un programme d'interface utilisateur, UI, PIN et un agent ;
dans lequel l'unité de commande (160) est configurée pour commander l'écran tactile (120), le stockage sécurité, et le stockage non-sécurisé,
dans lequel le programme UI PIN est configuré pour envoyer une requête d'entrée/sortie, I/O, sécurisée à l'agent en réponse à l'entrée utilisateur, l'agent est configuré pour initier le module de sécurité à entrée par code PIN en réponse à la requête d'I/O sécurisée, et le module de sécurité à entrée par code PIN est configuré pour définir un attribut de sécurité du panneau tactile (123) sur sécurisé, commander à la mémoire d'image de couche superposée sécurisée de restituer un écran de pavé numérique, recevoir une entrée tactile depuis le panneau tactile (123) dont l'attribut de sécurité est défini sur sécurisé, et transférer l'entrée tactile reçue au programme UI PIN ou à un dispositif de traitement d'entrée tactile.

22. Appareil selon la revendication 21, dans lequel le dispositif de traitement d'entrée tactile est l'un d'une carte universelle de circuit intégré, UICC, et d'un élément sécurisé, SE.

23. Appareil selon la revendication 21 ou 22, dans lequel le module de sécurité d'entrée à code PIN est configuré pour émettre des symboles correspondant à l'entrée tactile à la mémoire d'image de couche superposée sécurisée.

24. Appareil selon la revendication 21, 22 ou 23, dans lequel le module de sécurité à entrée par code PIN est configuré pour crypter l'entrée tactile reçue et envoie l'entrée tactile cryptée au programme UI PIN ou au dispositif de traitement d'entrée tactile.
